# FASCICULE DE BREVET EUROPEEN

(11) **EP 4 200 176 B1**
(45) Date de publication et mention de la délivrance du brevet: **10.07.2024**
(21) Numéro de dépôt: 21743528.8
(22) Date de dépôt: 21.07.2021
(51) Int. Cl.: B60W 30/14

(54) **PROCÉDÉ DE GESTION AUTOMATISÉE DE LA VITESSE LONGITUDINALE D'UN VÉHICULE**
VERFAHREN ZUR AUTOMATISCHEN STEUERUNG DER LÄNGSGESCHWINDIGKEIT EINES FAHRZEUGS
METHOD FOR AUTOMATICALLY MANAGING THE LONGITUDINAL SPEED OF A VEHICLE

(30) Priorité: 24.08.2020 FR 2008648
(43) Date de publication de la demande: 28.06.2023
(73) Titulaire: Ampere SAS, 92100 Boulogne-Billancourt (FR)
(72) Inventeur: KVIESKA, Pedro, 78000 Versailles (FR); PITA-GIL, Guillermo, 7800 VERSAILLES (FR)
(86) Numéro de dépôt international: PCT/EP2021/070451
(87) Numéro de publication internationale: WO 2022/042958

(56) Documents cités:
- DE-A1- 102016 213 660
- US-A1- 2013 297 196
- US-A1- 2016 159 350
- US-B1- 9 272 711

## Description

L'invention concerne un procédé de gestion automatisée de la vitesse longitudinale d'un véhicule. L'invention porte encore sur un dispositif de gestion automatisée de la vitesse longitudinale d'un véhicule. L'invention porte également sur un programme d'ordinateur mettant en oeuvre le procédé mentionné. L'invention porte enfin sur un support d'enregistrement sur lequel est enregistré un tel programme.

Les technologies d'assistance à la conduite sont de plus en plus répandues et ne sont plus limitées aux véhicules haut de gamme.

Ces technologies permettent de simplifier la conduite des véhicules automobiles et/ou de fiabiliser les comportements des conducteurs des véhicules. Les documents DE102016213660, US20130297196, US20160159350 et US9272711 illustrent de telles technologies.

Des systèmes de gestion automatisée de la vitesse sont couramment installés sur les véhicules actuels, fonctionnant généralement sur la base d'une régulation de distance entre le véhicule équipé, appelé aussi premier véhicule, et celui qui le précède dans sa voie de circulation, nommé véhicule cible ou plus simplement cible.

Ces systèmes de gestion automatisée de la vitesse ne permettent pas d'obtenir une intégration fluide et sûre dans un trafic environnant. Ainsi, les distances de sécurités avec les véhicules environnant ne sont pas toujours optimales et le véhicule peut subir des accélérations ou des freinages brutaux dégradant le confort et le sentiment de sécurité des passagers du véhicule.

Le but de l'invention est de fournir un système et un procédé de gestion automatisée de la vitesse longitudinale d'un véhicule qui remédie aux inconvénients ci-dessus.

Un premier objet de l'invention est un procédé de gestion de la vitesse longitudinale qui produise une régulation confortable et sécurisante pour les passagers du véhicule.

A cet effet, l'invention porte sur un procédé de gestion de la vitesse longitudinale d'un premier véhicule. Le procédé comprend les étapes suivantes :
- une étape de détection de véhicules dans un trafic environnant, le premier véhicule comprenant la détection d'au moins un véhicule à l'avant du premier véhicule et d'au moins un véhicule à l'arrière du premier véhicule,
- une étape de calcul de vitesses de référence comprenant un calcul d'au moins une première vitesse de référence en fonction de l'au moins un véhicule à l'avant du premier véhicule et un calcul d'au moins une deuxième vitesse de référence en fonction de l'au moins un véhicule à l'arrière du premier véhicule,
- une étape de calcul d'une consigne maximale de vitesse en fonction de la première vitesse de référence,
- une étape de calcul d'une consigne minimale de vitesse en fonction de la deuxième vitesse de référence,
- une étape de calcul d'une consigne de vitesse du premier véhicule, la consigne de vitesse du premier véhicule étant inférieure ou égale à ladite consigne maximale de vitesse et supérieure ou égale à ladite consigne minimale de vitesse.

L'étape de détection peut comprendre une détection d'au moins deux véhicules à l'avant du premier véhicule, ladite étape de calcul de vitesses de référence comprenant le calcul de vitesses de référence associées à chacun des véhicules détectés à l'avant du premier véhicule, la consigne maximale de vitesse étant égale au minimum des vitesses de référence associées à chacun des véhicules détectés à l'avant du premier véhicule.

Alternativement ou en complément l'étape de détection peut comprendre une détection d'au moins deux véhicules à l'arrière du premier véhicule, ladite étape de calcul de vitesses de référence comprenant le calcul de vitesses de référence associées à chacun des véhicules détectés à l'arrière du premier véhicule, la consigne minimale de vitesse étant égale au maximum des vitesses de référence associées à chacun des véhicules détectés à l'arrière du premier véhicule.

Au moins un véhicule parmi les véhicules détectés dans le trafic environnant le premier véhicule peut circuler sur une voie de circulation adjacente à une voie de circulation du premier véhicule, et l'étape de détection peut comprendre une sous-étape d'évaluation d'un risque d'intrusion dudit au moins un véhicule circulant sur la voie de circulation adjacente vers la voie de circulation du premier véhicule.

La voie de circulation adjacente peut être une voie d'entrée sur la voie de circulation du premier véhicule.

La sous-étape d'évaluation du risque d'intrusion dudit au moins un véhicule vers la voie de circulation du premier véhicule peut comprendre :
- un calcul d'un délai avant franchissement, par ledit au moins un véhicule circulant sur la voie de circulation adjacente, d'une ligne de démarcation située entre ladite voie de circulation adjacente et la voie de circulation du premier véhicule, et
- une comparaison du délai avant franchissement avec un seuil prédéfini.

Le procédé peut comprendre :
- une étape de réception d'une consigne d'allure émise par un conducteur du premier véhicule, puis
- une étape de comparaison de la consigne d'allure avec la consigne maximale de vitesse et avec la consigne minimale de vitesse,

Si la consigne d'allure est supérieure ou égale à la consigne minimale de vitesse et inférieure ou égale à la consigne maximale de vitesse, alors la consigne de vitesse longitudinale du premier véhicule peut être égale à la consigne d'allure.

Si la consigne d'allure est strictement supérieure à la consigne maximale de vitesse, alors la consigne de vitesse du premier véhicule peut être égale à la consigne maximale de vitesse.

Si la consigne d'allure est strictement inférieure à la consigne minimale de vitesse, alors la consigne de vitesse du premier véhicule peut être égale à la consigne minimale de vitesse.

Le procédé de gestion peut comprendre une étape de comparaison de la consigne maximale de vitesse et de la consigne minimale de vitesse.
- si la consigne minimale de vitesse est inférieure ou égale à la consigne maximale de vitesse, alors la consigne de vitesse du premier véhicule peut être inférieure ou égale à ladite consigne maximale de vitesse et supérieure ou égale à ladite consigne minimale de vitesse,
- si la consigne minimale de vitesse est strictement supérieure à la consigne maximale de vitesse, alors la consigne de vitesse du premier véhicule peut être égale à la consigne maximale de vitesse.

Le procédé de gestion peut comprendre une étape d'avertissement des véhicules environnant le premier véhicule si la consigne minimale de vitesse est strictement supérieure à la consigne maximale de vitesse.

L'étape d'avertissement peut comprendre une activation des feux stop du premier véhicule, et/ou une activation des feux de détresse du premier véhicule, et/ou une activation d'un avertisseur sonore du premier véhicule.

La vitesse de référence associée à un véhicule détecté dans l'environnement du premier véhicule peut être égale à la vitesse à laquelle le premier véhicule devrait se déplacer pour maintenir un délai de suivi prédéfini avec ledit véhicule détecté.

Toutes les vitesses longitudinales de référence peuvent être calculées selon la même méthode.

L'invention porte aussi sur un système de gestion automatisée de la vitesse longitudinale d'un véhicule comprenant un moyen de détection de véhicules, le système comprenant des éléments matériels et/ou logiciels mettant en oeuvre un procédé tel que défini précédemment.

L'invention porte aussi sur un véhicule automobile comprenant un système de gestion automatisée tel que défini précédemment.

L'invention porte aussi sur un produit programme d'ordinateur comprenant des instructions de code de programme enregistrées sur un support lisible par ordinateur pour mettre en oeuvre les étapes du procédé de gestion défini précédemment lorsque ledit programme fonctionne sur un ordinateur ou produit programme d'ordinateur téléchargeable depuis un réseau de communication et/ou enregistré sur un support de données lisible par un ordinateur et/ou exécutable par un ordinateur, caractérisé en ce en ce qu'il comprend des instructions qui, lorsque le programme est exécuté par l'ordinateur, conduisent celui-ci à mettre en oeuvre le procédé de gestion défini précédemment.

L'invention porte également sur un support d'enregistrement de données, lisible par un ordinateur, sur lequel est enregistré un programme d'ordinateur comprenant des instructions de code de programme de mise en oeuvre du procédé de gestion défini précédemment ou support d'enregistrement lisible par ordinateur comprenant des instructions qui, lorsqu'elles sont exécutées par un ordinateur, conduisent celui-ci à mettre en oeuvre le procédé de gestion défini précédemment.

L'invention porte également sur un signal d'un support de données, portant le produit programme d'ordinateur défini précédemment.

Le dessin annexé représente, à titre d'exemple, un mode de réalisation d'un dispositif de gestion automatisée de la vitesse longitudinale selon l'invention et un mode d'exécution d'un procédé de gestion automatisée de la vitesse longitudinale selon l'invention.
[Fig. 1] La figure 1 représente schématiquement un mode de réalisation d'un véhicule équipé d'un moyen de mise en oeuvre d'un procédé de gestion automatisée de la vitesse longitudinale d'un véhicule automobile.
[Fig. 2] La figure 2 représente schématiquement une première configuration de trafic prise en compte par le procédé de gestion de vitesse longitudinale d'un véhicule automobile.
[Fig. 3] La figure 3 représente schématiquement une deuxième configuration de trafic prise en compte par le procédé de gestion de vitesse longitudinale d'un véhicule automobile.
[Fig. 4] La figure 4 est un ordinogramme d'un mode d'exécution d'un procédé de gestion automatisée de la vitesse longitudinale d'un véhicule automobile.
[Fig. 5] La figure 5 représente un module de planification de trajectoire.
[Fig. 6] La figure 6 schématise l'enveloppe des valeurs possibles pour la consigne de vitesse longitudinale appliquée au premier véhicule, selon un mode de réalisation de l'invention.

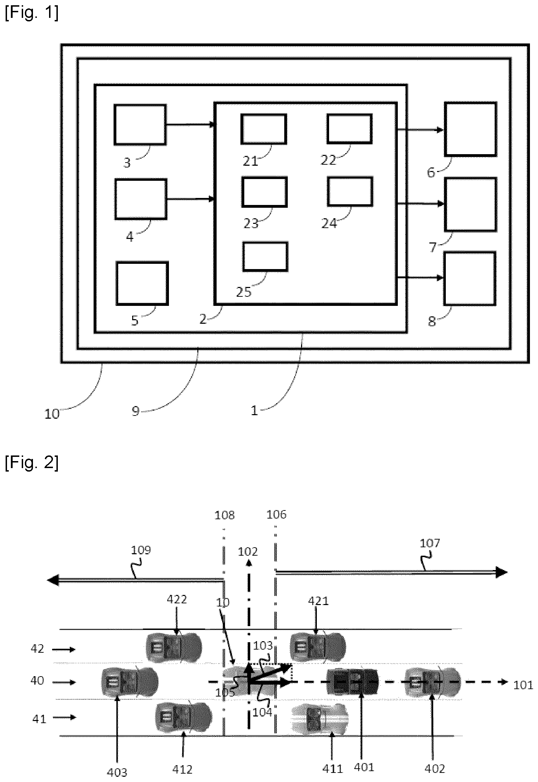

Un mode de réalisation d'un véhicule équipé d'un moyen de mise en oeuvre d'un procédé de gestion automatisée de la vitesse longitudinale est décrit ci-après en référence à la figure 1.

Le véhicule automobile 10 est un véhicule automobile de n'importe quel type, notamment un véhicule de tourisme ou un véhicule utilitaire. Dans ce document, le véhicule comprenant les moyens de mise en oeuvre de l'invention est dénommé véhicule "ego" ou premier véhicule. Ces appellations permettent uniquement de le distinguer d'autres véhicules environnants et ne confèrent en soi aucune limitation technique au véhicule automobile 10.

Le véhicule automobile 10 ou véhicule ego 10 ou premier véhicule comprend un système 1 de gestion automatisée de la vitesse longitudinale d'un véhicule automobile.

Le système 1 de gestion automatisée de la vitesse longitudinale d'un véhicule automobile peut faire partie d'un système plus global d'aide à la conduite 9.

Dans la suite du document, on désigne par véhicule cible un véhicule situé dans le trafic environnant du véhicule ego 10, dont les paramètres de trajectoire (parmi lesquels la position et la vitesse) sont pris en compte dans le calcul de la vitesse longitudinale de consigne du véhicule ego.

Un véhicule cible peut être un véhicule automobile de n'importe quel type, notamment un véhicule de tourisme ou un véhicule utilitaire ou encore une moto.

Le système 1 de gestion automatisée de la vitesse longitudinale d'un véhicule automobile comprend principalement les éléments suivants :
- un moyen de détection 3 des véhicules circulant sur la voie du véhicule automobile 10, dite voie principale, et sur les voies de circulation dites adjacentes situées de part et d'autre de la voie principale,
- une interface homme machine 4 permettant au conducteur du véhicule d'émettre une consigne d'allure intervenant dans le calcul de la consigne de vitesse du véhicule ego,
- un microprocesseur 2,
- une mémoire 5.

Le système 1 de gestion automatisée de la vitesse longitudinale d'un véhicule automobile, et particulièrement le microprocesseur 2, comprend principalement les modules suivants :
- un module de détection 21 d'au moins deux véhicules cibles dans le trafic environnant le véhicule ego, ce module pouvant coopérer avec le moyen de détection 3,
- un module de calcul 22 d'une vitesse longitudinale de référence associée à chacun desdits véhicules cible,
- un module de calcul 23 d'une consigne maximale de vitesse longitudinale du véhicule ego en fonction desdites vitesses longitudinales de référence,
- un module de calcul 24 d'une consigne minimale de vitesse longitudinale du véhicule ego en fonction desdites vitesses longitudinales de référence,
- un module de calcul 25 d'une consigne de vitesse longitudinale du véhicule ego en fonction desdites consignes maximale et minimale de vitesse longitudinale et d'une consigne d'allure émise par le conducteur du véhicule, ce module pouvant coopérer avec l'interface homme-machine 4.

Le véhicule automobile 10, en particulier le système 1 de gestion automatisée de la vitesse longitudinale d'un véhicule automobile, comprend de préférence tous les éléments matériels et/ou logiciels configurés de sorte à mettre en oeuvre le procédé défini dans les revendications et/ou le procédé décrit plus bas.

Le moyen de détection 3 peut comprendre par exemple un radar, et/ou un lidar, et/ou une caméra et/ou tout autre type de capteur adapté à détecter des cibles dans l'environnement du véhicule ego.

Le moyen de détection 3 peut fournir des mesures au microprocesseur 2, parmi lesquelles :
- la distance longitudinale entre le véhicule ego et les véhicules environnants,
- les vitesses longitudinale et latérale des véhicules environnants,
- l'accélération longitudinale et latérale des véhicules environnants, et
- la vitesse longitudinale relative des véhicules environnants par rapport au véhicule ego.

En outre, le microprocesseur 2 peut également recevoir une information portant la vitesse longitudinale du véhicule ego, par exemple au moyen de capteurs de vitesse du véhicule ego relié au système 1. Le microprocesseur 2 peut également recevoir une information portant la distance latérale entre le véhicule ego et des véhicules environnants et/ou des informations permettant de positionner le véhicule ego dans un référentiel, notamment de positionner le véhicule ego par rapport à des lignes de démarcation.

Le module 25 de calcul d'une consigne de vitesse longitudinale est apte à transmettre des ordres de commande à un moteur 6 ou à un système de freinage 7 du véhicule de sorte à contrôler la vitesse longitudinale du véhicule ego.

Le module 25 de calcul d'une consigne de vitesse longitudinale est apte à transmettre des ordres de commande à un avertisseur visuel ou sonore 8.

Le système 1 de gestion automatisée de la vitesse longitudinale d'un véhicule automobile comprend une mémoire 5. La mémoire 5 constitue un support d'enregistrement lisible par un ordinateur ou par le calculateur comprenant des instructions qui, lorsqu'elles sont exécutées par l'ordinateur ou le calculateur, conduisent celui-ci à mettre en oeuvre le procédé défini dans les revendications ou le procédé décrit plus bas.

En référence à la figure 2, on suppose que le véhicule automobile 10, dit véhicule ego, circule sur une chaussée comprenant trois voies de circulation dans le même sens. Les voies de circulations sont parallèles entre elles. En variante, l'invention pourrait également être mise en oeuvre dans une configuration où le véhicule ego circule sur une chaussée comprenant tout autre nombre de voies de circulation, notamment une unique voie de circulation, deux voies de circulation, ou encore quatre voies de circulation ou même davantage. Le véhicule ego 10 est positionné sur la voie centrale 40, c'est-à-dire qu'il y a une première voie de circulation 41 adjacente à droite du véhicule ego et une deuxième voie de circulation 42 adjacente à gauche du véhicule ego. En variante, l'invention pourrait aussi être mise en oeuvre lorsque le véhicule ego circule sur la voie de circulation 41 ou 42.

En référence à la figure 2, on définit la terminologie utilisée dans la suite du document :
- l'axe dit axe longitudinal 101 du véhicule ego est défini comme son axe de symétrie longitudinal, orienté vers l'avant du véhicule.
- L'axe dit axe latéral 102 du véhicule ego coupe perpendiculairement l'axe longitudinal 101 en un point situé au centre de gravité du véhicule ego, et il est orienté vers la gauche du véhicule ego.
- Le vecteur vitesse 103 du véhicule ego en projection sur l'axe longitudinal 101 définit la composante longitudinale 104 du vecteur vitesse, dite vitesse longitudinale.
- Le vecteur vitesse 103 du véhicule ego en projection sur l'axe latéral 102 définit la composante latérale 105 du vecteur vitesse, dite vitesse latérale,
- De même, une distance entre deux véhicules peut être projetée sur les axes longitudinal et latéral, définissant ainsi une distance longitudinale et une distance latérale.
- Par convention, un véhicule sera considéré comme situé à l'avant du véhicule ego s'il se trouve au moins partiellement (par exemple au moins à 50%) dans l'hémi-espace délimité par un axe 106 parallèle à l'axe latéral 102 et passant par l'extrémité avant du pare-chocs avant du véhicule ego et orienté dans la direction de l'axe 101. Cet hémi-espace correspond donc à une zone 107 dite de trafic situé à l'avant du véhicule ego.
- Par convention, un véhicule sera considéré comme situé à l'arrière du véhicule ego s'il se trouve au moins partiellement (par exemple au moins à 50%) dans l'hémi-espace délimité par un axe 108 parallèle à l'axe latéral 102 et passant par l'extrémité arrière du pare-chocs arrière du véhicule ego et orienté dans la direction opposée à l'axe 101. Cet hémi-espace correspond donc à une zone 109 dite de trafic situé à l'arrière du véhicule ego.
- La voie de circulation du véhicule ego 40 est dite voie principale.
- Les voies de circulation 41 et 42 adjacentes à la voie principale et situées de part et d'autre de cette voie sont dites voies adjacentes.

En variante, l'axe 106, marquant la délimitation de la zone de trafic dit avant 107 peut être reculé, de telle sorte à pouvoir sélectionner des cibles plus en amont dans le trafic (c'est-à-dire sur les côtés du véhicule ego) pour anticiper de potentiels véhicules en situation de cut-in ou de cut-out. Par exemple l'axe 106 pourrait être reculé au niveau de l'extrémité arrière du pare-chocs arrière du véhicule ego. On peut également considérer qu'un véhicule est une cible potentielle lorsqu'elle se trouve, par exemple, au moins à 10% dans la zone de trafic avant 107. Le procédé peut donc être mis en oeuvre en prenant en compte des véhicules situés sur les côtés du véhicule ego.

Le trafic environnant le véhicule ego 10 comprend sept véhicules 401, 402, 403, 411, 412, 421, 422 dits véhicules cibles.

Parmi ces véhicules, quatre sont situés dans le trafic dit avant du véhicule ego :
- Un premier véhicule cible 401 est positionné directement à l'avant du véhicule ego, sur la même voie de circulation 40 que le véhicule ego.
- Un deuxième véhicule cible 402 est positionné directement à l'avant du premier véhicule cible 401, sur la même voie de circulation 40 que le véhicule ego.
- Un troisième véhicule cible 411 est positionné sur la voie de circulation 41 adjacente, à droite du véhicule ego.
- Un quatrième véhicule cible 421 est positionné sur la voie de circulation 42 adjacente, à gauche du véhicule ego.

Les trois autres véhicules sont situés dans le trafic dit arrière du véhicule ego :
- Un cinquième véhicule cible 403 est positionné directement à l'arrière du véhicule ego, sur la même voie de circulation 40 que le véhicule ego.
- Un sixième véhicule cible 412 est positionné à l'arrière du véhicule ego sur la voie de circulation 41 adjacente, à droite du véhicule ego.
- Un septième véhicule cible 422 est positionné à l'arrière du véhicule ego sur la voie de circulation 42 adjacente, à gauche du véhicule ego.

Le procédé décrit ici sur la base d'une configuration dans laquelle le trafic environnant le véhicule ego comprend sept véhicules cibles pourrait en variante être mis en oeuvre avec tout nombre de véhicules cibles supérieur ou égal à deux, comprenant au moins un véhicule situé à l'avant du véhicule ego et un véhicule situé à l'arrière du véhicule ego. Par exemple, le procédé peut être mis en oeuvre dans une situation ou le trafic environnant ne comprend que les véhicules cibles 401 et 403, ou bien que les véhicules cibles 411 et 412, ou encore le véhicule cible 401 et le véhicule cible 422, ou encore le véhicule cible 421 et le véhicule cible 403.

Par ailleurs, comparativement à la configuration avec sept véhicules cibles illustrée sur la figure 2, entre un et quatre véhicules cibles pourraient être supprimés. Le trafic environnant situé à l'avant du véhicule ego pourrait encore comprendre cinq ou encore davantage de véhicules cibles. Le trafic environnant situé à l'arrière du véhicule ego pourrait également comprendre quatre ou encore davantage de véhicules cibles.

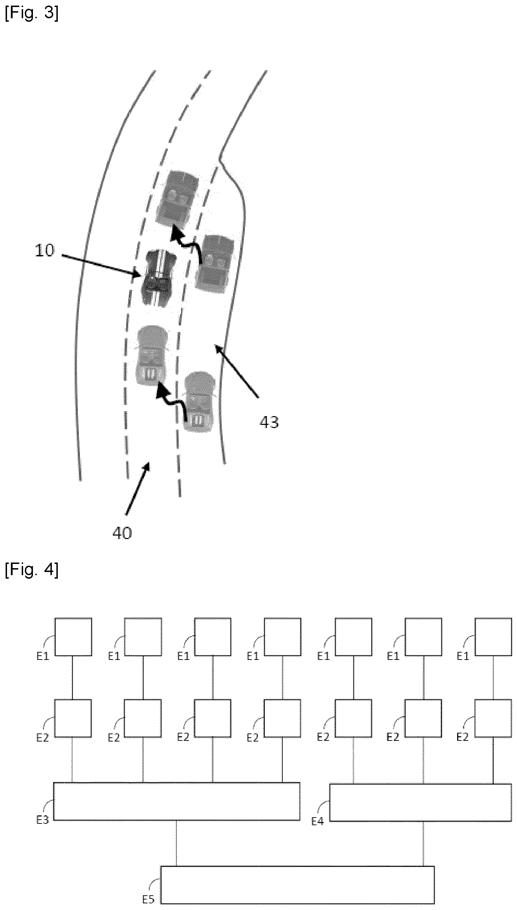

Un mode d'exécution d'un procédé de gestion automatisée de la vitesse longitudinale est décrit ci-après en référence à la figure 3. Le procédé de gestion peut aussi être vu comme étant un procédé de fonctionnement d'un système de gestion ou comme un procédé de fonctionnement d'un véhicule automobile équipé d'un système de gestion. Le procédé comprend cinq étapes E1, E2, E3, E4, E5 qui vont être détaillées par la suite. Comme illustré sur la figure 3, les étapes E1 et E2 sont exécutées en parallèle pour chacun des véhicules cibles 401, 402, 403, 411, 412, 421, 422. Chaque cible est donc traitée indépendamment des autres. Les étapes suivantes, E3, E4 et E5 sont exécutées successivement.

Dans une première étape E1, on détecte les véhicules cibles parmi le trafic environnant du véhicule ego.

Pour cela, le procédé traite des données reçues d'un moyen de détection 3 embarqué dans le véhicule ego.

Les données issues du moyen de détection peuvent permettre de déterminer la localisation du véhicule ego par rapport aux voies de circulation. En particulier, elles permettent de déterminer s'il existe des voies de circulation 41 et/ou 42 adjacentes à la voie principale 40.

La détection de voies adjacentes peut être réalisée par analyse du marquage au sol, à partir des données reçues des moyens de détection 3.

La prise en compte des voies adjacentes dans la détection des cibles a pour objectif de tenir compte des véhicules qui sont susceptibles de quitter la voie principale (situation dite de "cut-out") ou s'insérer sur la voie principale (situation dite de cut-in).

Dans une sous-étape E11, le risque d'une situation de cut-out (déboitement) ou d'une situation de cut-in (insertion), ou risque d'intrusion, associé à un véhicule circulant sur une voie adjacente peut être évalué en fonction de différents critères parmi lesquels :
- un seuil minimum appliqué au Time to Line Crossing ou TLC dudit véhicule, correspondant au délai avant intrusion dudit véhicule sur la voie de circulation du véhicule ego dans le cas d'un cut-in, ou correspondant au délai avant déboitement dudit véhicule de la voie de circulation du véhicule ego dans le cas d'un cut-out, et/ou
- la détection de la présence d'un clignotant sur ledit véhicule, et/ou
- la prise en compte de la vitesse latérale dudit véhicule, et/ou
- un seuil minimum appliqué à la distance longitudinale et/ou latérale séparant ledit véhicule du véhicule ego.

La sélection des cibles s'effectue sur la zone constituée de la voie principale 40 et des deux voies adjacentes 41 et 42. Pour chaque cible sélectionnée, le procédé détermine si elle se situe à l'avant ou à l'arrière du véhicule ego 10.

Dans un mode de réalisation, les critères de sélection des cibles situées à l'avant du véhicule ego peuvent être les suivants :
- au moins une et au plus quatre cibles sont sélectionnées par le procédé,
- la sélection des cibles s'effectue sur la zone de trafic 107 située à l'avant du véhicule ego,
- les cibles 401 et 402 sont sélectionnées sur la voie principale 40,
- les cibles sélectionnées sur la voie principale 40 sont le véhicule 401 qui précède le véhicule ego, et le véhicule 402 qui précède le véhicule 401,
- sur chacune des voies adjacentes 41 et 42, une cible est sélectionnée, à la condition qu'elle soit détectée comme étant à risque de cut-in.

De plus, dans ce mode de réalisation, les critères de sélection des cibles situées à l'arrière du véhicule ego peuvent être les suivants :
- au moins une et au plus trois cibles sont sélectionnées,
- la sélection des cibles s'effectue sur la zone de trafic 108 située à l'arrière du véhicule ego,
- la cible 403 suivant le véhicule ego est sélectionnée sur la voie principale 40,
- sur chacune des voies adjacentes 41 et 42, une cible est sélectionnée, à la condition qu'elle soit détectée comme étant à risque de cut-in.

Ainsi, sur la configuration de trafic présentée par la figure 2, la première étape du procédé identifiera automatiquement les véhicules 401, 402, 403 comme étant des cibles et évaluera le risque d'intrusion de chacun des véhicules 411, 412, 421 et 422 pour déterminer s'ils constituent des cibles.

La première étape E1, prend en compte différentes configurations concernant les voies de circulation :
- lorsque le nombre de voies circulant dans le même sens est supérieur à trois, de préférence seules les au plus deux voies adjacentes de la voie principale sont prises en compte,
- lorsque le véhicule ego circule sur la voie la plus à gauche ou la plus à droite d'une route, de préférence une seule voie adjacente est prise en compte,
- sur les routes à une seule voie, de préférence seules les trois cibles situées sur la voie dite principale seront détectées.

Avantageusement, la première étape E1 prend également en compte la détection de cibles sur une voie d'entrée 43, autrement dit une voie d'insertion sur la voie de circulation du véhicule ego, telle qu'illustrée dans la figure 3. Ainsi, lorsque le véhicule ego circule sur la voie de plus faible vitesse 41 et longe une voie d'entrée 43 adjacente à sa voie de circulation, deux véhicules cibles circulant sur la voie d'entrée 43 peuvent être pris en compte, l'un se situant à l'avant du véhicule ego et l'autre se situant à l'arrière du véhicule ego.

La première étape E1 prend également en compte la détection de cibles dans les virages. En particulier, dans un virage, la trajectoire d'un véhicule circulant sur une voie adjacente 41 ou 42 peut croiser temporairement l'axe longitudinal du véhicule ego, alors même que ce véhicule reste sur la voie adjacente à celle du véhicule ego. Le procédé a la capacité d'analyser cette situation de manière connue, de sorte que ledit véhicule soit bien considéré comme circulant sur une voie adjacente.

Les changements de voie des véhicules situés dans le trafic environnant du véhicule ego sont analysés de manière dynamique lors de l'exécution du procédé, en particulier lorsqu'ils modifient la sélection des cibles. Par exemple, si un véhicule 421 se rabat entre le véhicule ego et la cible 401 située juste devant le véhicule ego, alors le véhicule 421 remplacera la cible 401 et cette dernière remplacera la cible 402 qui ne sera de ce fait plus prise en compte par le procédé.

Lors de la phase transitoire d'un changement de voie d'un véhicule situé dans le trafic environnant du véhicule ego, le procédé applique des critères permettant de déterminer dans quelle voie se situe un véhicule en train de franchir une ligne de démarcation. Ces critères peuvent inclure la distance latérale de franchissement d'une ligne de démarcation.

En variante, un mode de réalisation pourrait traiter plus de sept cibles.

Dans une deuxième étape E2, pour chaque cible sélectionnée par l'étape E1, le procédé calcule une vitesse longitudinale dite de référence. Ladite vitesse longitudinale de référence associée à une cible est la vitesse longitudinale à laquelle le véhicule ego doit se déplacer pour établir puis maintenir un temps de suivi Tₕ avec ladite cible. Pour une cible située à l'avant du véhicule ego 10, le temps de suivi Tₕ correspond au temps qui serait mis par le véhicule ego -se déplaçant à la vitesse longitudinale de référence- pour rejoindre la position actuellement occupée par ladite cible. Pour une cible située à l'arrière du véhicule ego 10, le temps de suivi Tₕ correspond au temps qui serait mis par ladite cible pour rejoindre le véhicule ego 10 -se déplaçant à la vitesse longitudinale de référence-. Plus la valeur du temps de suivi Tₕ est élevée, plus la distance longitudinale entre le véhicule ego 10 et la cible est élevée.

Une première valeur du temps de suivi Tₕ peut être fixée par des normes sécuritaires, par exemple 2 secondes : dans la suite du document, cette première valeur est nommée Tₕ sécuritaire THSEC. Dans un mode de réalisation, le Tₕ sécuritaire THSEC peut dépendre de la vitesse du véhicule ego 10.

Une deuxième valeur du temps de suivi Tₕ peut être fixée par une requête dite d'allure du conducteur : dans la suite du document, cette deuxième valeur est nommée Tₕ conducteur THCOND. La requête d'allure fixée par le conducteur peut par exemple être définie par trois niveaux de suivi de la cible : un niveau de suivi proche, un niveau de suivi modéré et un niveau de suivi éloigné. Chaque niveau de suivi est associé à une valeur de Tₕ conducteur THCOND qui peut en outre dépendre de la vitesse du véhicule ego 10. La requête d'allure peut être établie et visualisée par l'intermédiaire d'une interface homme-machine 4 disponible sur le tableau de bord du conducteur. Par exemple, la requête d'allure peut être affichée sous forme de barres, trois barres correspondant à une allure de suivi éloigné et un Tₕ conducteur THCOND élevé, deux barres correspondant à une allure de suivi modéré et un Tₕ conducteur THCOND modéré, une barre correspondant à une allure de suivi proche et un Tₕ conducteur THCOND réduit.

Le Tₕ conducteur THCOND est préférentiellement supérieur ou égal au Tₕ sécuritaire THSEC. Alternativement, le conducteur peut être amené à sélectionner un THCOND strictement inférieur au THSEC. Dans ce cas, une alarme doit le prévenir du risque induit par son choix.

Dans le mode de réalisation décrit par la suite, le conducteur n'a pas la possibilité de sélectionner un THCOND strictement inférieur au THSEC. Autrement dit le THCOND est supérieur ou égal au THSEC.

Dans une première sous-étape E21, le Tₕ sécuritaire THSEC est utilisé pour calculer la vitesse longitudinale de référence associée à une cible. La sous-étape E21 permet d'associer à chaque cible une vitesse longitudinale de référence dite sécuritaire, également nommée vitesse de référence sécuritaire VREFSEC.

Pour une cible située à l'avant du véhicule ego 10, la vitesse de référence sécuritaire VREFSEC correspond à un seuil maximum en dessous duquel la vitesse du véhicule ego doit se situer pour mettre en oeuvre un temps de suivi de ladite cible supérieur ou égal au temps de suivi sécuritaire THSEC.

Pour une cible située à l'arrière du véhicule ego 10, la vitesse de référence sécuritaire VREFSEC correspond à un seuil minimum au-dessus duquel la vitesse du véhicule ego doit se situer pour mettre en oeuvre temps de suivi de ladite cible supérieur ou égal au temps de suivi sécuritaire THSEC.

Dans ce premier mode de réalisation, le calcul la vitesse de référence sécuritaire VREFSEC associée à une cible peut intégrer un module de planification de trajectoire 80 dont le rôle est de maintenir une distance longitudinale sensiblement constante entre ladite cible et le véhicule ego en régime permanent.

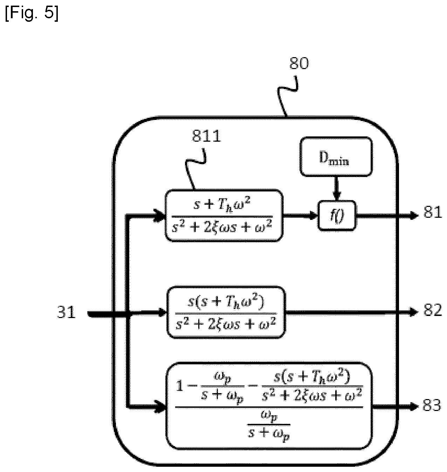

Dans un mode de réalisation du module de planification de trajectoire 80 présenté figure 5, un asservissement de deuxième ordre peut être utilisé pour lisser les éventuelles variations de vitesses induites par une cible dont le mode de conduite serait saccadé.

Dans ce mode de réalisation, le module de planification de trajectoire 80, dont un exemple est détaillé en figure 5, prend en entrée la vitesse longitudinale 31 de la cible et produit trois paramètres en sortie :
- la distance longitudinale de référence 81 à maintenir entre le véhicule ego et la cible,
- la vitesse longitudinale relative de référence 82 que le véhicule ego doit maintenir par rapport à la cible, et
- une variable de pré-asservissement 83, dite Feedforward.

Une méthode de calcul de ces paramètres est illustrée dans la figure 5, où :
- s est la variable de Laplace (variable fonction d'une fréquence),
- ξ est le coefficient d'amortissement souhaité pour une dynamique de second ordre (sans dimension),
- ω est la pulsation naturelle ou propre non amortie pour une dynamique du second ordre (exprimée en radian par seconde),
- ωₚ est la constante de temps du moteur (exprimée en radian par seconde),
- Tₕ est le temps de suivi (exprimé en secondes) ; plus particulièrement, dans la sous-étape E21, Th est égal au temps de suivi sécuritaire THSEC,
- la fonction f() est une fonction non linéaire qui arbitre entre la distance longitudinale calculée par un module de calcul de distance longitudinale 811, et une distance longitudinale minimale Dₘᵢₙ, par exemple la fonction f() peut retourner le maximum des deux distances longitudinales précitées.

Dans le mode de réalisation décrit, la distance longitudinale de référence 81, la vitesse longitudinale relative de référence 82 et la variable de pré-asservissement 83 sont ensuite fournies en entrée d'une boucle dite de régulation qui calcule la vitesse de référence sécuritaire VREFSEC associée à la cible à partir de ces paramètres.

Puis, dans une sous-étape E22 le procédé calcule également pour chaque cible située à l'avant du véhicule ego une vitesse longitudinale de référence associée au Th conducteur, également nommée vitesse de référence conducteur VREFCOND.

Pour une cible située à l'avant du véhicule ego 10, la vitesse de référence conducteur VREFCOND correspond à un seuil maximum en dessous duquel la vitesse du véhicule ego doit se situer pour mettre en oeuvre un temps de suivi de ladite cible supérieur ou égal au temps de suivi conducteur THCOND.

Les cibles situées à l'arrière du véhicule ego ne sont pas prises en compte dans le calcul de la vitesse de référence conducteur VREFCOND.

Dans cette deuxième sous-étape E22, le calcul la vitesse de référence conducteur VREFCOND associée à une cible peut intégrer un module de planification de trajectoire 80 tel que précédemment décrit dans la sous-étape E21. Le temps de suivi Th utilisé dans le module de planification de trajectoire est alors le temps de suivi conducteur THCOND.

Dans une troisième étape E3, on calcule la consigne maximale de vitesse longitudinale CMAX du véhicule ego permettant de maintenir un temps de suivi sécuritaire THSEC donné entre le véhicule ego et toutes les cibles situées à l'avant du véhicule ego identifiées dans l'étape E1.

Le calcul de la consigne maximale de vitesse longitudinale CMAX prendra en compte uniquement les cibles situées à l'avant du véhicule ego. La consigne CMAX sera calculée en sélectionnant la vitesse minimale parmi toutes les vitesses de référence sécuritaires VREFSEC calculées lors de l'étape E2 pour les cibles situées à l'avant du véhicule ego.

Dans une quatrième étape E4, le procédé calcule la consigne minimale de vitesse longitudinale CMIN du véhicule ego permettant de maintenir un temps de suivi sécuritaire THSEC donné entre le véhicule ego et toutes les cibles situées à l'arrière du véhicule ego identifiées dans l'étape E1.

Le calcul de la consigne minimale de vitesse longitudinale CMIN prendra en compte uniquement les cibles situées à l'arrière du véhicule ego. La consigne CMIN sera calculée en sélectionnant la vitesse maximale parmi toutes les vitesses de référence sécuritaires VREFSEC calculées lors de l'étape E2 pour les cibles situées à l'arrière du véhicule ego.

Dans une cinquième étape E5, le procédé calcule la consigne de vitesse longitudinale CVL du véhicule ego.

Dans une première sous-étape E51, la consigne maximale de vitesse longitudinale CMAX est comparée à la consigne minimale de vitesse longitudinale CMIN.

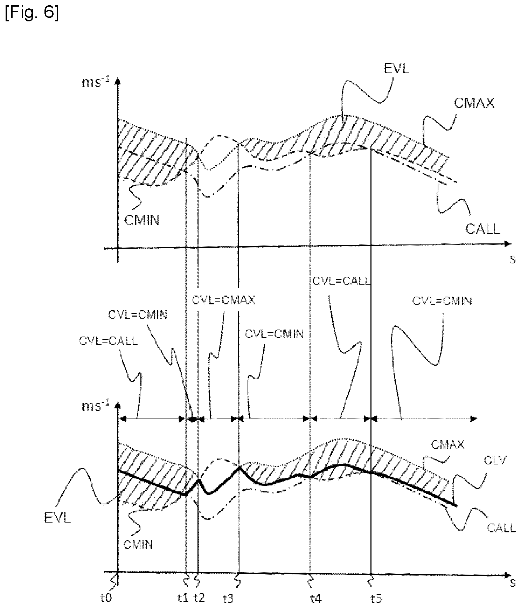

Si la consigne maximale de vitesse longitudinale CMAX est strictement inférieure à la consigne minimale de vitesse longitudinale CMIN, cela signifie qu'il n'est pas possible de déterminer une consigne de vitesse longitudinale CVL permettant de respecter un temps de suivi sécuritaire THSEC à la fois par rapport aux cibles situées à l'avant du véhicule ego et par rapport aux cibles situées à l'arrière du véhicule ego. En d'autres termes, la vitesse de la cible la plus contraignante parmi les cibles situées à l'arrière du véhicule ego est trop importante par rapport à la vitesse de la cible la plus contraignante parmi les cibles situées à l'avant du véhicule ego 10. Dans ce cas, la consigne de vitesse longitudinale CVL du véhicule ego est fixée à la consigne maximale de vitesse longitudinale CMAX. Ce cas de figure est illustré dans la figure 6, entre les instants t2 et t3.

Ce choix permet d'éviter en priorité que le véhicule ego ait un accident avec une cible située devant lui, ce qui engagerait sa responsabilité.

Afin de limiter les risques d'accident avec les cibles situées à l'arrière du véhicule ego, le procédé commande une activation des feux stop du véhicule ego, et/ou une activation des feux de détresse du véhicule ego, et/ou une activation d'un avertisseur sonore du véhicule ego.

Dans le cas où la consigne maximale de vitesse longitudinale CMAX est supérieure ou égale à la consigne minimale de vitesse longitudinale CMIN, alors, dans une sous-étape E52, le procédé calcule la consigne d'allure CALL permettant de maintenir un temps de suivi conducteur THCOND donné entre le véhicule ego et toutes les cibles situées à l'avant du véhicule ego identifiées dans l'étape E1.

Le calcul de la consigne d'allure CALL prendra en compte uniquement les cibles situées à l'avant du véhicule ego. La consigne CALL sera calculée en sélectionnant la vitesse minimale parmi toutes les vitesses de référence conducteur VREFCOND calculées lors de l'étape E2 pour les cibles situées à l'avant du véhicule ego.

Dans une sous-étape E53, on compare ensuite la consigne d'allure du conducteur CALL -calculée pour respecter un temps de suivi THCOND déterminé par le conducteur du véhicule ego- aux consignes minimale et maximale de vitesse longitudinale CMIN, CMAX, calculées pour respecter un temps de suivi sécuritaire THSEC avec les cibles situées à l'avant et à l'arrière du véhicule ego.

Les différents cas possibles sont illustrés dans la figure 6,:
- Entre t0 et t1, puis entre t4 et t5, la consigne d'allure conducteur CALL est comprise entre la consigne minimale de vitesse CMIN et la consigne maximale de vitesse CMAX, alors la consigne de vitesse longitudinale du véhicule ego CVL prend la valeur de la consigne d'allure conducteur CALL,
- Entre les instants t1 et t2, puis entre les instants t3 et t4, puis au-delà de t5, la consigne d'allure conducteur CALL est inférieure à la consigne minimale de vitesse CMIN, alors la consigne de vitesse longitudinale du véhicule ego CVL prend la valeur CMIN,
- Entre t2 et t3, la consigne minimale de vitesse CMIN est supérieure à la consigne maximale de vitesse CMAX, alors la consigne de vitesse longitudinale du véhicule ego CVL prend la valeur CMAX.

Ainsi la mise en oeuvre de l'invention a pour effet de maintenir la vitesse longitudinale du véhicule ego dans une enveloppe de vitesses longitudinales EVL (représentée dans la figure 6). L'enveloppe EVL est définie par application d'un temps de suivi sécuritaire THSEC, par rapport aux véhicules cibles situés d'une part à l'avant et d'autre part à l'arrière du véhicule ego, lesdits véhicules cibles pouvant se situer sur la voie de circulation 40 du véhicule ego ou sur les voies adjacentes 41, 42 à celles du véhicule ego.

Dans le mode de réalisation décrit, le temps de suivi fixé par le conducteur THCOND étant supérieur ou égal au temps de suivi sécuritaire THSEC, la consigne de vitesse longitudinale CALL se situe soit dans l'enveloppe EVL, soit en dessous de l'enveloppe EVL.

Lorsque le conducteur fixe une consigne de vitesse longitudinale CALL située dans l'enveloppe EVL, alors la consigne d'allure fixée par le conducteur est appliquée.

Lorsque la consigne d'allure fixée par le conducteur détermine une consigne de vitesse longitudinale CALL se situant en dessous de l'enveloppe EVL non vide, alors le procédé mettra en oeuvre la consigne de vitesse longitudinale maximale CMIN déterminée par l'application du temps de suivi sécuritaire par rapport aux cibles situées à l'arrière du véhicule ego.

Dans les cas où l'enveloppe EVL est vide, c'est-à-dire lorsqu'il n'est pas possible de mettre en oeuvre un temps de suivi sécuritaire à la fois avec les véhicules cibles situés à l'avant du véhicule ego et ceux situés à l'arrière du véhicule ego, alors le procédé mettra en oeuvre la consigne de vitesse longitudinale maximale CMAX déterminée par l'application du temps de suivi sécuritaire par rapport aux cibles situées à l'avant du véhicule ego et actionnera des moyens d'alerte pour avertir du danger les véhicules situés à l'arrière du véhicule ego.

## Revendications

1. Procédé de gestion de la vitesse longitudinale d'un premier véhicule (10), comprenant:
- une étape de détection (E1) de véhicules dans un trafic environnant, le premier véhicule (10) comprenant la détection d'au moins un véhicule (401, 402, 411, 421) à l'avant du premier véhicule et d'au moins un véhicule (403, 412, 422) à l'arrière du premier véhicule,
- une étape de calcul de vitesses de référence (E2) comprenant un calcul d'au moins une première vitesse de référence en fonction de l'au moins un véhicule à l'avant du premier véhicule et un calcul d'au moins une deuxième vitesse de référence en fonction de l'au moins un véhicule à l'arrière du premier véhicule,
**caractérisé en ce que** le procédé comprend
- une étape de calcul (E3) d'une consigne maximale de vitesse (CMAX) en fonction de la première vitesse de référence,
- une étape de calcul (E4) d'une consigne minimale de vitesse (CMIN) en fonction de la deuxième vitesse de référence,
- une étape de calcul (E5) d'une consigne de vitesse du premier véhicule, la consigne de vitesse du premier véhicule (CVL) étant inférieure ou égale à ladite consigne maximale de vitesse (CMAX) et supérieure ou égale à ladite consigne minimale de vitesse (CMIN).

2. Procédé de gestion selon la revendication précédente, **caractérisé en ce que** ladite étape de détection (E1) comprend une détection d'au moins deux véhicules à l'avant du premier véhicule, ladite étape de calcul de vitesses de référence (E2) comprenant le calcul de vitesses de référence associées à chacun des véhicules détectés à l'avant du premier véhicule, la consigne maximale de vitesse étant égale au minimum des vitesses de référence associées à chacun des véhicules détectés à l'avant du premier véhicule,
et/ou **en ce que** ladite étape de détection (E1) comprend une détection d'au moins deux véhicules à l'arrière du premier véhicule, ladite étape de calcul de vitesses de référence (E2) comprenant le calcul de vitesses de référence associées à chacun des véhicules détectés à l'arrière du premier véhicule, la consigne minimale de vitesse étant égale au maximum des vitesses de référence associées à chacun des véhicules détectés à l'arrière du premier véhicule.

3. Procédé de gestion selon l'une des revendications précédentes, **caractérisé en ce qu'**au moins un véhicule parmi les véhicules détectés dans le trafic environnant le premier véhicule circule sur une voie de circulation (41, 42) adjacente à une voie de circulation (40) du premier véhicule, et **en ce que** la première étape (E1) comprend une sous-étape d'évaluation d'un risque d'intrusion (E11) dudit au moins un véhicule circulant sur la voie de circulation adjacente vers la voie de circulation (40) du premier véhicule.

4. Procédé de gestion selon la revendication précédente, **caractérisé en ce que** ladite voie de circulation adjacente est une voie d'entrée (43) sur la voie de circulation (40) du premier véhicule.

5. Procédé de gestion selon la revendication précédente, **caractérisé en ce que** la sous-étape d'évaluation du risque d'intrusion (E11) dudit au moins un véhicule vers la voie de circulation (40) du premier véhicule comprend :
- un calcul d'un délai avant franchissement (TLC), par ledit au moins un véhicule circulant sur la voie de circulation adjacente, d'une ligne de démarcation située entre ladite voie de circulation (41, 42) adjacente et la voie de circulation (40) du premier véhicule, et
- une comparaison du délai avant franchissement (TLC) avec un seuil prédéfini.

6. Procédé de gestion selon l'une des revendications précédentes, **caractérisé en ce qu'**il comprend :
- une étape de réception d'une consigne d'allure (CALL) émise par un conducteur du premier véhicule, puis
- une étape de comparaison de la consigne d'allure avec la consigne maximale de vitesse (CMAX) et avec la consigne minimale de vitesse (CMIN),
et **en ce que** si la consigne d'allure est supérieure ou égale à la consigne minimale de vitesse et inférieure ou égale à la consigne maximale de vitesse, alors la consigne de vitesse longitudinale (CVL) du premier véhicule est égale à la consigne d'allure (CALL).

7. Procédé de gestion selon la revendication précédente, **caractérisé en ce que** si la consigne d'allure (CALL) est strictement supérieure à la consigne maximale de vitesse (CMAX), alors la consigne de vitesse du premier véhicule est égale à la consigne maximale de vitesse,
et/ou **en ce que** si la consigne d'allure est strictement inférieure à la consigne minimale de vitesse (CMIN), alors la consigne de vitesse du premier véhicule est égale à la consigne minimale de vitesse.

8. Procédé de gestion selon l'une des revendications précédentes, **caractérisé en ce qu'**il comprend une étape de comparaison (E51) de la consigne maximale de vitesse (CMAX) et de la consigne minimale de vitesse (CMIN), et **en ce que** :
- si la consigne minimale de vitesse (CMIN) est inférieure ou égale à la consigne maximale de vitesse (CMAX), alors la consigne de vitesse du premier véhicule (CVL) est inférieure ou égale à ladite consigne maximale de vitesse (CMAX) et supérieure ou égale à ladite consigne minimale de vitesse (CMIN)
- si la consigne minimale de vitesse (CMIN) est strictement supérieure à la consigne maximale de vitesse (CMAX), alors la consigne de vitesse du premier véhicule (CVL) est égale à la consigne maximale de vitesse (CMAX).

9. Procédé de gestion selon la revendication précédente, **caractérisé en ce qu'**il comprend une étape d'avertissement (E52) des véhicules environnant le premier véhicule si la consigne minimale de vitesse est strictement supérieure à la consigne maximale de vitesse.

10. Procédé de gestion selon l'une des revendications précédentes, **caractérisé en ce que** la vitesse de référence associée à un véhicule détecté dans l'environnement du premier véhicule est égale à la vitesse à laquelle le premier véhicule devrait se déplacer pour maintenir un délai de suivi (Th) prédéfini avec ledit véhicule détecté.

11. Procédé de gestion selon l'une des revendications précédentes, **caractérisé en ce que** toutes les vitesses longitudinales de référence sont calculées selon la même méthode.

12. Système (1) de gestion automatisée de la vitesse longitudinale d'un véhicule (10) comprenant un moyen de détection (3) de véhicules, le système comprenant des éléments matériels et/ou logiciels mettant en oeuvre le procédé de gestion selon l'une des revendications 1 à 11.

13. Véhicule (10) automobile comprenant un système (1) de gestion automatisée selon la revendication précédente.

14. Produit programme d'ordinateur comprenant des instructions de code de programme enregistrées sur un support lisible par ordinateur pour mettre en oeuvre les étapes du procédé de gestion selon l'une quelconque des revendications 1 à 11 lorsque ledit programme fonctionne sur un ordinateur.

## Patentansprüche

1. Verfahren zur Steuerung der Längsgeschwindigkeit eines ersten Fahrzeugs (10), umfassend:
- einen Schritt der Erkennung (E1) von Fahrzeugen in einem umgebenden Verkehr, wobei das erste Fahrzeug (10) die Erkennung mindestens eines Fahrzeugs (401, 402, 411, 421) vor dem ersten Fahrzeug und mindestens eines Fahrzeugs (403, 412, 422) hinter dem ersten Fahrzeug umfasst,
- einen Schritt der Berechnung von Referenzgeschwindigkeiten (E2), der eine Berechnung mindestens einer ersten Referenzgeschwindigkeit in Abhängigkeit von dem mindestens einen Fahrzeug vor dem ersten Fahrzeug und eine Berechnung mindestens einer zweiten Referenzgeschwindigkeit in Abhängigkeit von dem mindestens einen Fahrzeug hinter dem ersten Fahrzeug umfasst, **dadurch gekennzeichnet, dass** das Verfahren umfasst:
- einen Schritt der Berechnung (E3) eines maximalen Geschwindigkeitssollwertes (CMAX) in Abhängigkeit von der ersten Referenzgeschwindigkeit,
- einen Schritt der Berechnung (E4) eines minimalen Geschwindigkeitssollwertes (CMIN) in Abhängigkeit von der zweiten Referenzgeschwindigkeit,
- einen Schritt der Berechnung (E5) eines Geschwindigkeitssollwertes des ersten Fahrzeugs, wobei der Geschwindigkeitssollwert des ersten Fahrzeugs (CVL) kleiner oder gleich dem maximalen Geschwindigkeitssollwert (CMAX) und größer oder gleich dem minimalen Geschwindigkeitssollwert (CMIN) ist.

2. Verfahren zur Steuerung nach dem vorhergehenden Anspruch, **dadurch gekennzeichnet, dass** der Schritt der Erkennung (E1) eine Erkennung von mindestens zwei Fahrzeugen vor dem ersten Fahrzeug umfasst, wobei der Schritt der Berechnung von Referenzgeschwindigkeiten (E2) die Berechnung von Referenzgeschwindigkeiten umfasst, die den einzelnen vor dem ersten Fahrzeug erkannten Fahrzeugen zugeordnet sind, wobei der maximale Geschwindigkeitssollwert gleich dem Minimum der Referenzgeschwindigkeiten ist, die den einzelnen vor dem ersten Fahrzeug erkannten Fahrzeugen zugeordnet sind,
und/oder dadurch, dass der Schritt der Erkennung (E1) eine Erkennung von mindestens zwei Fahrzeugen hinter dem ersten Fahrzeug umfasst, wobei der Schritt der Berechnung von Referenzgeschwindigkeiten (E2) die Berechnung von Referenzgeschwindigkeiten umfasst, die den einzelnen hinter dem ersten Fahrzeug erkannten Fahrzeugen zugeordnet sind, wobei der minimale Geschwindigkeitssollwert gleich dem Maximum der Referenzgeschwindigkeiten ist, die den einzelnen hinter dem ersten Fahrzeug erkannten Fahrzeugen zugeordnet sind.

3. Verfahren zur Steuerung nach einem der vorhergehenden Ansprüche, **dadurch gekennzeichnet, dass** mindestens ein Fahrzeug von den Fahrzeugen, die in dem das erste Fahrzeug umgebenden Verkehr erkannt wurden, in einer Fahrspur (41, 42) fährt, die einer Fahrspur (40) des ersten Fahrzeugs benachbart ist, und dadurch, dass der erste Schritt (E1) einen Teilschritt der Beurteilung eines Risikos des Wechselns (E11) des mindestens einen in der benachbarten Fahrspur fahrenden Fahrzeugs in die Fahrspur (40) des ersten Fahrzeugs umfasst.

4. Verfahren zur Steuerung nach dem vorhergehenden Anspruch, **dadurch gekennzeichnet, dass** die benachbarte Fahrspur eine Einfahrspur (43) in die Fahrspur (40) des ersten Fahrzeugs ist.

5. Verfahren zur Steuerung nach dem vorhergehenden Anspruch, **dadurch gekennzeichnet, dass** der Teilschritt der Beurteilung eines Risikos des Wechselns (E11) des mindestens einen Fahrzeugs in die Fahrspur (40) des ersten Fahrzeugs umfasst:
- eine Berechnung einer Verzögerung vor der Überquerung (TLC), durch das mindestens eine in der benachbarten Fahrspur fahrende Fahrzeug, einer Markierungslinie, die sich zwischen der benachbarten Fahrspur (41, 42) und der Fahrspur (40) des ersten Fahrzeugs befindet, und
- einen Vergleich der Verzögerung vor der Überquerung (TLC) mit einem vorbestimmten Schwellenwert.

6. Verfahren zur Steuerung nach einem der vorhergehenden Ansprüche, **dadurch gekennzeichnet, dass** es umfasst:
- einen Schritt des Empfangs eines Fahrgeschwindigkeitssollwertes (CALL), der von einem Fahrer des ersten Fahrzeugs ausgegeben wird,
- einen Schritt des Vergleichs des Fahrgeschwindigkeitssollwertes mit dem maximalen Geschwindigkeitssollwert (CMAX) und mit dem minimalen Geschwindigkeitssollwert (CMIN),
und dadurch, dass, falls der Fahrgeschwindigkeitssollwert größer oder gleich dem minimalen Geschwindigkeitssollwert und kleiner oder gleich dem maximalen Geschwindigkeitssollwert ist, der Längsgeschwindigkeitssollwert (CVL) des ersten Fahrzeugs gleich dem Fahrgeschwindigkeitssollwert (CALL) ist.

7. Verfahren zur Steuerung nach dem vorhergehenden Anspruch, **dadurch gekennzeichnet, dass**, falls der Fahrgeschwindigkeitssollwert (CALL) streng größer als der maximale Geschwindigkeitssollwert (CMAX) ist, der Geschwindigkeitssollwert des ersten Fahrzeugs gleich dem maximalen Geschwindigkeitssollwert ist,
und/oder dadurch, dass, falls der Fahrgeschwindigkeitssollwert streng kleiner als der minimale Geschwindigkeitssollwert (CMIN) ist, der Geschwindigkeitssollwert des ersten Fahrzeugs gleich dem minimalen Geschwindigkeitssollwert ist.

8. Verfahren zur Steuerung nach einem der vorhergehenden Ansprüche, **dadurch gekennzeichnet, dass** es einen Schritt des Vergleichs (E51) des maximalen Geschwindigkeitssollwertes (CMAX) und des minimalen Geschwindigkeitssollwertes (CMIN) umfasst, und dadurch, dass:
- falls der minimale Geschwindigkeitssollwert (CMIN) kleiner oder gleich dem maximalen Geschwindigkeitssollwert (CMAX) ist, der Geschwindigkeitssollwert des ersten Fahrzeugs (CVL) kleiner oder gleich dem maximalen Geschwindigkeitssollwert (CMAX) und größer oder gleich dem minimalen Geschwindigkeitssollwert (CMIN) ist,
- falls der minimale Geschwindigkeitssollwert (CMIN) streng größer als der maximale Geschwindigkeitssollwert (CMAX) ist, der Geschwindigkeitssollwert des ersten Fahrzeugs (CVL) gleich dem maximalen Geschwindigkeitssollwert (CMAX) ist.

9. Verfahren zur Steuerung nach dem vorhergehenden Anspruch, **dadurch gekennzeichnet, dass** es einen Schritt der Warnung (E52) der das erste Fahrzeug umgebenden Fahrzeuge umfasst, falls der minimale Geschwindigkeitssollwert streng größer als der maximale Geschwindigkeitssollwert ist.

10. Verfahren zur Steuerung nach einem der vorhergehenden Ansprüche, **dadurch gekennzeichnet, dass** die Referenzgeschwindigkeit, die einem in der Umgebung des ersten Fahrzeugs erkannten Fahrzeug zugeordnet ist, gleich der Geschwindigkeit ist, mit der das erste Fahrzeug fahren müsste, um eine vordefinierte Nachfolgeverzögerung (Th) mit dem erkannten Fahrzeug aufrechtzuerhalten.

11. Verfahren zur Steuerung nach einem der vorhergehenden Ansprüche, **dadurch gekennzeichnet, dass** alle Referenz-Längsgeschwindigkeiten nach derselben Methode berechnet werden.

12. System (1) zur automatisierten Steuerung der Längsgeschwindigkeit eines Fahrzeugs (10), welches ein Mittel zur Erkennung (3) von Fahrzeugen umfasst, wobei das System Hardware- und/oder Softwareelemente umfasst, die das Verfahren zur Steuerung nach einem der Ansprüche 1 bis 11 ausführen.

13. Kraftfahrzeug (10), welches ein System (1) zur automatisierten Steuerung nach dem vorhergehenden Anspruch umfasst.

14. Computerprogrammprodukt, welches Programmcodeanweisungen umfasst, die auf einem computerlesbaren Datenträger aufgezeichnet sind, um die Schritte des Verfahrens zur Steuerung nach einem der Ansprüche 1 bis 11 auszuführen, wenn das Programm auf einem Computer läuft.

## Claims

1. Method for managing the longitudinal speed of a first vehicle (10), comprising:
- a step (E1) of detecting vehicles in nearby traffic, the first vehicle (10) comprising detecting at least one vehicle (401, 402, 411, 421) ahead of the first vehicle and at least one vehicle (403, 412, 422) behind the first vehicle,
- a step (E2) of calculating reference speeds, comprising calculating at least a first reference speed on the basis of the at least one vehicle ahead of the first vehicle and calculating at least a second reference speed on the basis of the at least one vehicle behind the first vehicle, **characterized in that** the method comprises
- a step (E3) of calculating a maximum speed setpoint (CMAX) on the basis of the first reference speed,
- a step (E4) of calculating a minimum speed setpoint (CMIN) on the basis of the second reference speed,
- a step (E5) of calculating a speed setpoint of the first vehicle, the speed setpoint of the first vehicle (CVL) being less than or equal to said maximum speed setpoint (CMAX) and greater than or equal to said minimum speed setpoint (CMIN).

2. Management method according to the preceding claim, **characterized in that** said detecting step (E1) comprises detecting at least two vehicles ahead of the first vehicle, said step (E2) of calculating reference speeds comprising calculating reference speeds associated with each of the vehicles detected ahead of the first vehicle, the maximum speed setpoint being equal to the minimum of the reference speeds associated with each of the vehicles detected ahead of the first vehicle,
and/or **in that** said detecting step (E1) comprises detecting at least two vehicles behind the first vehicle, said step (E2) of calculating reference speeds comprising calculating reference speeds associated with each of the vehicles detected behind the first vehicle, the minimum speed setpoint being equal to the maximum of the reference speeds associated with each of the vehicles detected behind the first vehicle.

3. Management method according to either of the preceding claims, **characterized in that** at least one vehicle from among the vehicles detected in the traffic near the first vehicle is travelling in a lane (41, 42) adjacent to a lane (40) of the first vehicle, and **in that** the first step (E1) comprises a sub-step (E11) of evaluating a risk of said at least one vehicle travelling in the adjacent lane intruding into the lane (40) of the first vehicle.

4. Management method according to the preceding claim, **characterized in that** said adjacent lane is an entry lane (43) onto the lane (40) of the first vehicle.

5. Management method according to the preceding claim, **characterized in that** the sub-step (E11) of evaluating the risk of said at least one vehicle intruding into the lane (40) of the first vehicle comprises:
- calculating a time to crossing (TLC), by said at least one vehicle travelling in the adjacent lane, of a demarcation line located between said adjacent lane (41, 42) and the lane (40) of the first vehicle, and
- comparing the time to crossing (TLC) with a predefined threshold.

6. Management method according to one of the preceding claims, **characterized in that** it comprises:
- a step of receiving a pace setpoint (CALL) issued by a driver of the first vehicle, and then
- a step of comparing the pace setpoint with the maximum speed setpoint (CMAX) and with the minimum speed setpoint (CMIN),
and **in that**, if the pace setpoint is greater than or equal to the minimum speed setpoint and less than or equal to the maximum speed setpoint, then the longitudinal speed setpoint (CVL) of the first vehicle is equal to the pace setpoint (CALL).

7. Management method according to the preceding claim, **characterized in that**, if the pace setpoint (CALL) is strictly greater than the maximum speed setpoint (CMAX), then the speed setpoint of the first vehicle is equal to the maximum speed setpoint,
and/or **in that**, if the pace setpoint is strictly less than the minimum speed setpoint (CMIN), then the speed setpoint of the first vehicle is equal to the minimum speed setpoint.

8. Management method according to one of the preceding claims, **characterized in that** it comprises a step (E51) of comparing the maximum speed setpoint (CMAX) and the minimum speed setpoint (CMIN), and **in that**:
- if the minimum speed setpoint (CMIN) is less than or equal to the maximum speed setpoint (CMAX), then the speed setpoint of the first vehicle (CVL) is less than or equal to said maximum speed setpoint (CMAX) and greater than or equal to said minimum speed setpoint (CMIN),
- if the minimum speed setpoint (CMIN) is strictly greater than the maximum speed setpoint (CMAX), then the speed setpoint of the first vehicle (CVL) is equal to the maximum speed setpoint (CMAX).

9. Management method according to the preceding claim, **characterized in that** it comprises a step (E52) of warning vehicles near the first vehicle if the minimum speed setpoint is strictly greater than the maximum speed setpoint.

10. Management method according to one of the preceding claims, **characterized in that** the reference speed associated with a vehicle detected in the surroundings of the first vehicle is equal to the speed at which the first vehicle should move to maintain a predefined following time (Th) with said detected vehicle.

11. Management method according to one of the preceding claims, **characterized in that** all reference longitudinal speeds are calculated using the same method.

12. System (1) for the automated management of the longitudinal speed of a vehicle (10) comprising a vehicle detection means (3), the system comprising hardware elements and/or software elements implementing the management method according to one of Claims 1 to 11.

13. Motor vehicle (10) comprising an automated management system (1) according to the preceding claim.

14. Computer program product comprising program code instructions recorded on a computer-readable medium for implementing the steps of the management method according to any one of Claims 1 to 11 when said program runs on a computer.
